# FASCICULE DE BREVET EUROPEEN

(11) **EP 1 707 781 B1**
(45) Date de publication et mention de la délivrance du brevet: **02.04.2008**
(21) Numéro de dépôt: 06300138.2
(22) Date de dépôt: 15.02.2006
(51) Int. Cl.: F02D 9/10, F02D 9/04, F02M 25/07, F16K 11/052

(54) **Moteur à combustion interne avec un système de vanne pour réguler le taux de gaz de recirculation dans le mélange d'admission, et le véhicule automobile comprenant un tel moteur.**
Brennkraftmaschine mit einem Ventilsystem zur Regelung einer Abgasrückführrate und Kraftfahrzeug mit einer solchen Brennkraftmaschine.
Internal combustion engine with a valve system for regulating an exhaust gas recirculation rate and an automotive vehicle comprising such an engine.

(30) Priorité: 14.03.2005 FR 0502474
(43) Date de publication de la demande: 04.10.2006
(73) Titulaire: Renault S.A.S., 92100 Boulogne-Billancourt (FR)
(72) Inventeur: Piard, Christophe, 91620 La Ville Du Bois (FR)

(56) Documents cités:
- EP-A- 0 702 175
- EP-A- 1 365 124
- EP-A- 1 505 281
- DE-A1- 4 007 516
- US-A- 1 398 976
- US-A- 4 566 424
- US-A- 5 740 785

## Description

La présente invention concerne de manière générale les moteurs à combustion interne.

Elle concerne plus particulièrement un moteur à combustion interne qui comprend d'une part, en aval d'une chambre de combustion, une ligne d'échappement qui se divise en deux conduites dans lesquelles circulent deux flux de gaz brûlés, à savoir une conduite d'échappement débouchant vers l'extérieur et une conduite de recirculation basse pression raccordée à une ligne d'admission d'air située en amont de la chambre de combustion, et d'autre part, des moyens de régulation pour obstruer ladite conduite d'échappement et pour réguler le débit du flux de gaz brûlés circulant dans la conduite de recirculation basse pression.

L'invention trouve une application particulièrement avantageuse dans la réalisation d'un moteur Diesel dans lequel on fait recirculer une partie des gaz brûlés à basse pression vers la chambre de combustion afin de limiter les émissions de particules polluantes vers l'extérieur.

### ARRIERE-PLAN TECHNOLOGIQUE

Généralement les moteurs à combustion interne du type précité utilisent comme gaz d'admission un mélange d'air frais et de gaz brûlés. Ces gaz brûlés sont appelés communément gaz de recirculation (gaz EGR). Ils sont prélevés par la conduite de recirculation basse pression dans la ligne d'échappement en aval des turbines d'un turbocompresseur et d'un filtre à particules à convertisseur catalytique, et sont introduits dans une conduite d'admission d'air frais en amont du compresseur dudit turbocompresseur.

Dans les moteurs déjà connus, il est prévu sur cette conduite de recirculation basse pression une soupape commandée électriquement et dont l'ouverture règle le débit de gaz de recirculation dans ladite conduite de recirculation basse pression afin d'obtenir un mélange adéquat d'air frais et de gaz brûlés dans ladite conduite d'admission.

En outre, dans ces moteurs, il est prévu une vanne à volet sur la conduite d'échappement débouchant vers l'extérieur pour obstruer à la demande
une partie de la section de ladite conduite d'échappement et ainsi augmenter la pression des gaz brûlés dans la conduite de recirculation basse pression.

L'ouverture ou la fermeture de ces vannes permet alors d'obtenir le taux désiré de gaz de recirculation dans le mélange d'admission.

L'inconvénient principal d'un tel système de vannes est que ces vannes sont pilotées par deux actionneurs différents, de façon disjointe mais successive, pour obtenir le taux souhaité de gaz de recirculation dans le mélange. Le pilotage est ainsi relativement complexe à mettre en oeuvre.

### OBJET DE L'INVENTION

Afin de remédier à l'inconvénient précité de l'état de la technique, la présente invention propose un moteur à combustion interne dans lequel le débit de gaz de recirculation est commandé de manière simplifiée.

Plus particulièrement, on propose selon l'invention un moteur à combustion interne tel que défini en introduction, dans lequel il est prévu que les moyens de régulation comprennent une vanne à deux volets déplaçables par un seul actionneur, chaque volet étant disposé dans une des conduites d'échappement et de recirculation basse pression.

Ainsi, grâce à l'invention, une unique vanne joue le rôle des deux vannes du système de vannes selon l'art antérieur, ce qui permet de réaliser un gain de coût, de poids, d'encombrement et de fiabilité. En outre, le fait d'utiliser un unique actionneur afin de régler le taux de gaz EGR (c'est-à-dire le débit du flux de gaz de recirculation circulant dans ladite conduite de recirculation basse pression) dans le mélange d'admission du moteur selon l'invention a pour effet de simplifier la cartographie de pilotage de l'ensemble.

Selon une première caractéristique avantageuse du moteur conforme à l'invention, il comprend un filtre à particules à convertisseur catalytique disposé sur la ligne d'échappement en amont desdites conduites d'échappement et de recirculation basse pression.

Ainsi, les gaz EGR du moteur selon l'invention passent dans le filtre à particules à convertisseur catalytique avant d'être injectés dans le gaz frais, diminuant alors significativement la pollution engendrée par le moteur.

Selon une autre caractéristique avantageuse du moteur conforme à l'invention, les deux volets sont montés pivotants sur le même axe de rotation.

Selon un premier mode de réalisation du moteur à combustion interne conforme à l'invention, les deux volets sont montés fixes l'un par rapport à l'autre.

En outre, selon ce premier mode de réalisation, ces deux volets sont positionnés orthogonalement l'un relativement à l'autre et sont adaptés à pivoter avec un débattement de l'ordre de 81 °.

Ainsi, avantageusement selon l'invention, lorsque la commande ouvre avec un angle donné le volet positionné dans la conduite de recirculation basse pression, elle ferme simultanément du même angle le volet positionné dans la conduite d'échappement ce qui permet alors d'augmenter la pression des gaz de recirculation circulant dans la conduite de recirculation basse pression.

Préférentiellement, l'angle de débattement des deux volets est limité à environ 81 ° afin d'éviter de fermer totalement la conduite d'échappement, ce qui étoufferait le moteur.

Selon un deuxième mode de réalisation du moteur à combustion interne conforme à l'invention, les deux volets sont montés libres l'un par rapport à l'autre.

Avantageusement, selon ce deuxième mode de réalisation, les deux volets sont positionnés au niveau de la division de la ligne d'échappement en deux conduites d'échappement et de recirculation basse pression.

En outre, selon ce deuxième mode de réalisation, le volet positionné dans la conduite de recirculation basse pression est adapté à pivoter avec un débattement de 90° et le volet positionné dans la conduite d'échappement est adapté à pivoter avec un débattement de 81 °.

Par ailleurs, préférentiellement, selon ce deuxième mode de réalisation, l'actionneur est adapté à déplacer de manière successive le volet positionné dans la conduite de recirculation basse pression puis le volet positionné dans la conduite d'échappement.

Ainsi, selon ce mode de réalisation de l'invention, l'ouverture et la fermeture des volets se fait de manière successive. Cette solution présente l'avantage d'optimiser le rendement du moteur en n'obstruant pas inutilement la conduite d'échappement. Par ailleurs, selon ce mode de réalisation, s'il est possible d'ouvrir ou de fermer totalement la conduite de recirculation basse pression, il n'est pas possible d'obstruer complètement la conduite d'échappement, évitant ainsi tout risque d'étouffement du moteur.

### DESCRIPTION DETAILLEE D'UN EXEMPLE DE REALISATION

La description qui va suivre en regard des dessins annexés donnés à titre d'exemples non limitatifs, fera bien comprendre en quoi consiste l'invention et comment elle peut être réalisée.

Sur les dessins annexés :
- La figure 1 est un schéma de principe simplifié d'un premier mode de réalisation d'un moteur à combustion interne selon l'invention ;
- La figure 2 est une vue schématique de détail de la zone II de la figure 1 ;
- La figure 3 est une vue schématique en perspective de la vanne de la figure 2;
- La figure 4 est une vue schématique en perspective d'une variante de réalisation de la vanne de la figure 3 ;
- Les figures 5A à 5C sont des schémas de principe du fonctionnement de la vanne de la figure 4.

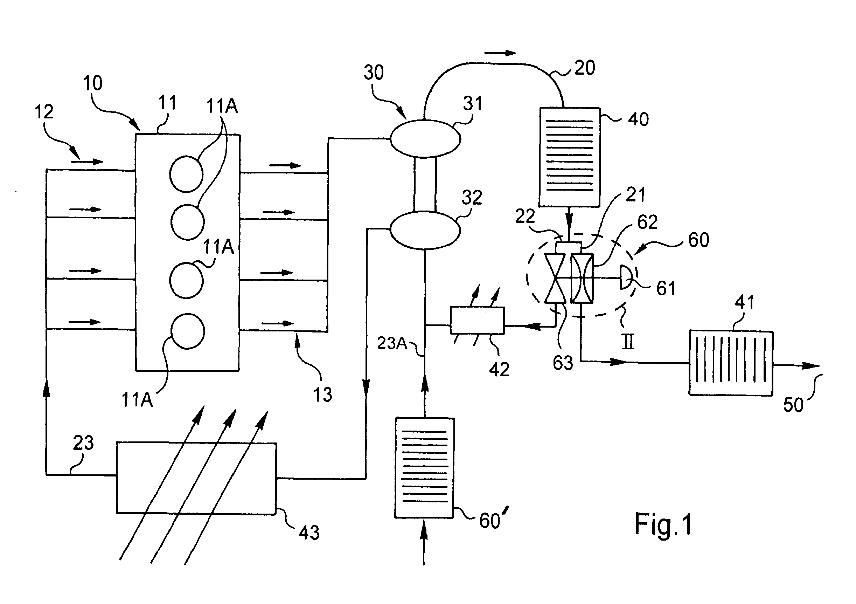

Sur la figure 1, on a représenté schématiquement un moteur à combustion interne 10 qui comprend une chambre de combustion 11, ici à quatre cylindres 11 A. En sortie de la chambre de combustion 11, le moteur à combustion interne 10 comporte un collecteur 13 de gaz brûlés qui débouche dans une ligne d'échappement 20 qui s'étend jusqu'à un filtre à particules à convertisseur catalytique 40.

En outre, le moteur à combustion interne 10 comporte sur cette ligne d'échappement 20 un système de turbine 31 d'un turbocompresseur 30.

A la sortie du filtre à particules à convertisseur catalytique 40, la ligne d'échappement 20 se divise en deux conduites 21,22 dans lesquelles circulent deux flux de gaz brûlés.

Une des deux conduites 21,22 est une conduite d'échappement 2 1 qui débouche vers l'extérieur 50 via un silencieux 41. L'autre des deux conduites 21,22 est une conduite de recirculation basse pression 22 qui permet d'injecter dans une ligne d'admission d'air 23 une partie des gaz brûlés issus de la combustion, appelés gaz de recirculation, pour réaliser un mélange d'admission comprenant de l'air frais et des gaz brûlés.

La conduite de recirculation basse pression 22 passe par un refroidisseur secondaire 42 avant de déboucher dans une conduite d'admission 23A d'air frais provenant de l'extérieur via un filtre à air 60.

Au-delà de la jonction entre la conduite de recirculation basse pression 22 et la conduite d'admission 23A, la ligne d'admission 23 s'étend jusqu'à un répartiteur 12 qui débouche dans la chambre de combustion 11, en passant par le compresseur 32 du turbocompresseur 30 puis par un refroidisseur principal 43.

Par ailleurs, le moteur à combustion interne 10 comprend des moyens de régulation pour, d'une part, obstruer ladite conduite d'échappement 21, d'autre part, réguler le débit de flux des gaz de recirculation circulant dans la conduite de recirculation basse pression 22 afin d'obtenir le taux désiré de gaz de recirculation dans le mélange d'admission en fonction du régime moteur.

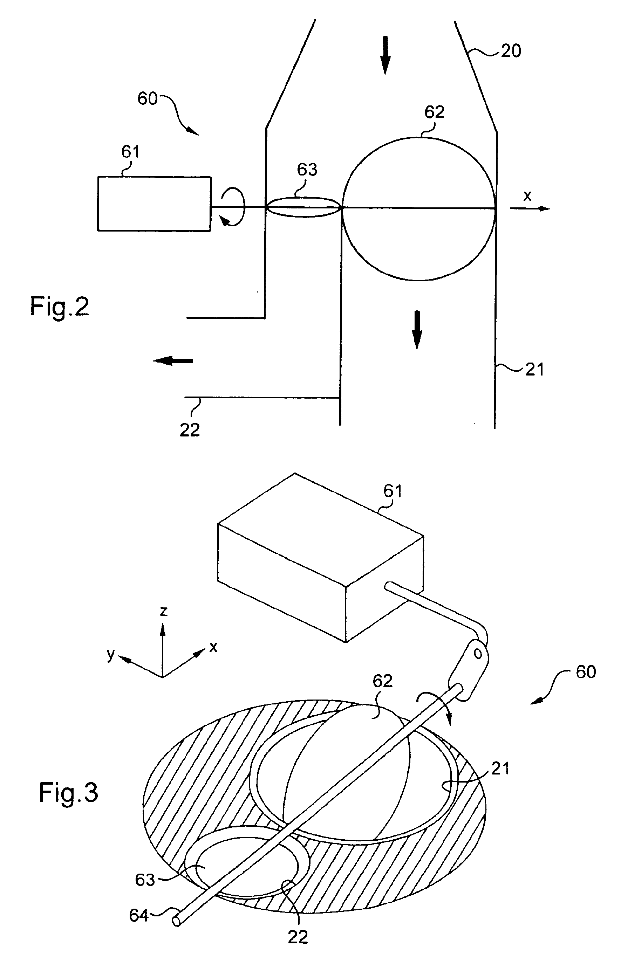

Selon une caractéristique particulièrement avantageuse du moteur à combustion interne 10, lesdits moyens de régulation comportent une vanne 60 à deux volets 62,63 déplaçables par un seul actionneur 61, chaque volet 62,63 étant disposé dans une des conduites d'échappement 21 et de recirculation 22 (voir figure 2).

Le déplacement du volet 62 de la vanne 60 permet d'obstruer ladite conduite d'échappement 21, augmentant alors la pression des gaz de recirculation circulant dans la conduite de recirculation basse pression 22. Par ailleurs, le déplacement du volet 63 de la vanne 60 permet de réguler le débit de flux de gaz de recirculation circulant dans ladite conduite de recirculation basse pression 22. La combinaison du déplacement des deux volets 62,63 permet ainsi d'optimiser le taux de gaz de recirculation dans le mélange d'admission quelque soit le régime moteur.

Comme le montrent plus particulièrement les figures 2 et 3, le diamètre de chacun des deux volets 62,63 correspond approximativement au diamètre intérieur de la conduite dans laquelle il se trouve.

Préférentiellement, les volets 62,63 sont montés rotatifs autour d'un même axe de rotation X.

Selon le mode de réalisation représenté sur les figures 2 et 3, les volets 62,63 sont solidaires d'un seul arbre 64 d'axe de rotation X connecté à l'actionneur 61, de sorte qu'ici les deux volets 62,63 sont fixes l'un par rapport à l'autre. En outre, comme le montrent les figures 2 et 3, les volets 62,63 de la vanne 60 sont positionnés orthogonalement l'un par rapport à l'autre selon leur axe de rotation X.

Ainsi, lorsqu'un volet est en position d'ouverture parallèle à la direction du flux des gaz brûlés dans la conduite considérée, l'autre est en position de fermeture.

Plus particulièrement, en position de recirculation non amorcée, le volet 62 de la conduite d'échappement 21 est complètement ouvert, c'est-à-dire positionné parallèlement à la direction du flux de gaz, dans le plan XZ sur la figure 3. Le volet 63 de la conduite de recirculation basse pression 22 est quant à lui complètement fermé, c'est-à-dire dans le plan XY sur la figure 3.

Afin d'amorcer et de régler le débit du flux des gaz de recirculation circulant dans la conduite de recirculation basse pression 22, la commande 61 fait pivoter les volets 62,63 mécaniquement liés de l'angle désiré afin d'optimiser le taux de gaz de recirculation dans le mélange.

Ainsi, le volet 63 régule le débit de flux de gaz de recirculation circulant dans la conduite de recirculation basse pression 22, et le volet 62 limite le débit du flux de gaz circulant dans la conduite d'échappement 21, augmentant alors simultanément la pression et le débit du flux de gaz de recirculation circulant dans la conduite de recirculation basse pression 22.

Préférentiellement, le débattement en rotation de l'arbre 64 est de l'ordre de 81 °, ce qui évite d'obstruer totalement la conduite d'échappement 21. De ce fait, l'ouverture du volet 63 positionné dans la conduite de recirculation basse pression 22 n'est ouvert qu'à environ 90%.

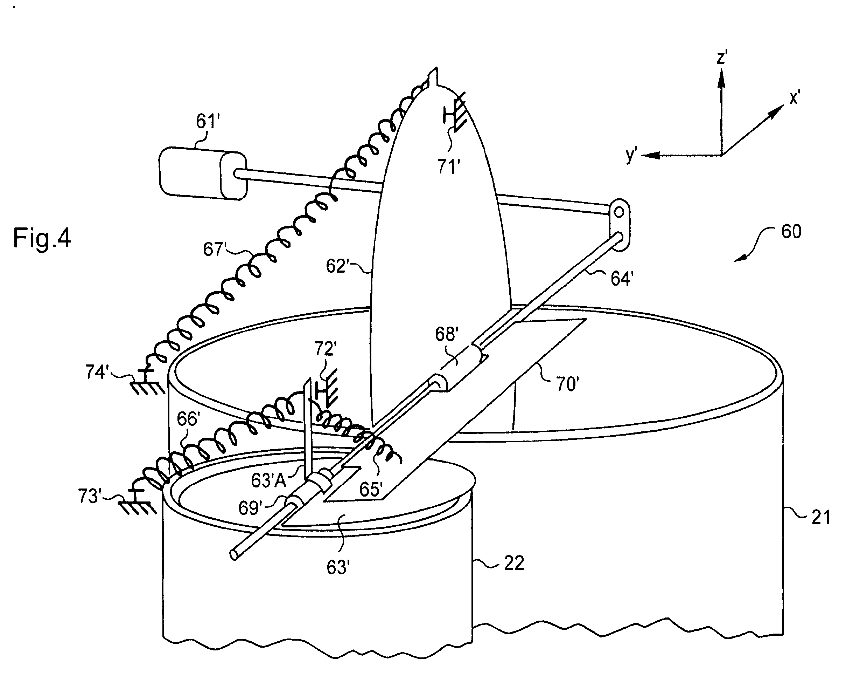

Sur la figure 4, on a représenté une variante de réalisation de la vanne 60 du moteur à combustion interne 10 selon laquelle les deux volets 61',62' sont montés libres l'un par rapport à l'autre selon l'axe de rotation X'.

Selon ce mode de réalisation, un actionneur 61' commande en rotation un arbre principal 64' d'axe de rotation X'. Par ailleurs, le volet 62' est monté en rotation libre sur l'arbre principal 64' à l'aide d'une liaison pivot 68' et le volet 63' est monté en rotation libre sur l'arbre principal 64' à l'aide d'une liaison pivot 69' indépendante de la liaison pivot 68'.

Ici également, le volet 62' régule le débit de gaz circulant dans la conduite d'échappement 21 et le volet 63' régule le débit de gaz circulant dans la conduite de recirculation basse pression 22. Le diamètre de chacun des deux volets 62',63' correspond approximativement au diamètre intérieur de la conduite dans laquelle il se trouve.

En outre, selon ce mode de réalisation représenté sur la figure 4, les deux volets 61',62' sont positionnés au niveau de la division de la ligne d'échappement en deux conduites d'échappement et de recirculation basse pression.

Par ailleurs, il est prévu une lamelle 63'A fixée au volet 63'. Cette lamelle 63'A est orthogonale audit volet 63' et sert de commande relais pour faire pivoter, grâce à la liaison pivot 68', le volet 63' autour de l'axe de rotation X'.

En outre, selon ce mode de réalisation, il est prévu, d'une part, un volet de commande 70' fixé sur l'arbre principal 64', et, d'autre part, un système de ressorts de compression 65',66',67' mis en place pour lier lesdits volets 62',63' au volet de commande 70' et à des bâtis 71',72',73',74' afin de faire pivoter les deux volets 62',63' autour de l'axe de rotation X' (voir figure 4).

Plus particulièrement, un ressort de compression 65' est, d'un côté, lié au volet de commande 70' et, de l'autre, lié à la lamelle 63'A du volet 63'. En outre, un ressort de compression 66' est lié, d'un côté, à ladite lamelle 63'A du volet 63' et, de l'autre, lié à un bâti 73'. Ledit ressort de compression 66' a une raideur presque négligeable par rapport à la raideur dudit ressort de compression 65'.

Le bâti 73' sert de butée au volet 63' lorsque ce dernier a pivoté d'un angle d'environ 90°.

Par ailleurs, un ressort de compression 67' est, d'un côté, lié au volet 62' et, de l'autre, lié à un bâti 74'. Ledit ressort de compression 67' possède la même raideur que le ressort de compression 66'. En outre, le bâti 74' sert de butée au volet 62' lorsque ce dernier a pivoté d'un angle d'environ 81 °.

En position de recirculation non amorcée, le ressort de compression 65' est totalement détendu et le ressort de compression 66' est peu compressé, maintenant ainsi la lamelle 63'A du volet 63' en appui contre le bâti 72', de sorte que la surface du volet 63' se trouve dans le plan X'Y' sur la figure 4, obstruant alors totalement la conduite de recirculation basse pression 22'.

Le ressort de compression 67' est lui aussi peu compressé et maintient le volet 62' en appui contre le bâti 71', de sorte que la surface du volet 62' se trouve dans le plan X'Z' de la figure 4, parallèlement à la direction du flux des gaz brûlés dans la conduite d'échappement 21 qui est ainsi ouverte.

Par ailleurs, la surface du volet de commande 70' est disposée sensiblement dans le plan X'Y' de la figure 4 ; le volet de commande 70' est donc pratiquement superposé au volet 63' et n'a aucun contact avec le volet 62' qui s'étend orthogonalement audit volet de commande 70'.

Pour amorcer le flux de gaz de recirculation dans la conduite de recirculation basse pression 22, l'actionneur 61' fait pivoter l'arbre principal 64' et donc le volet de commande 70'.

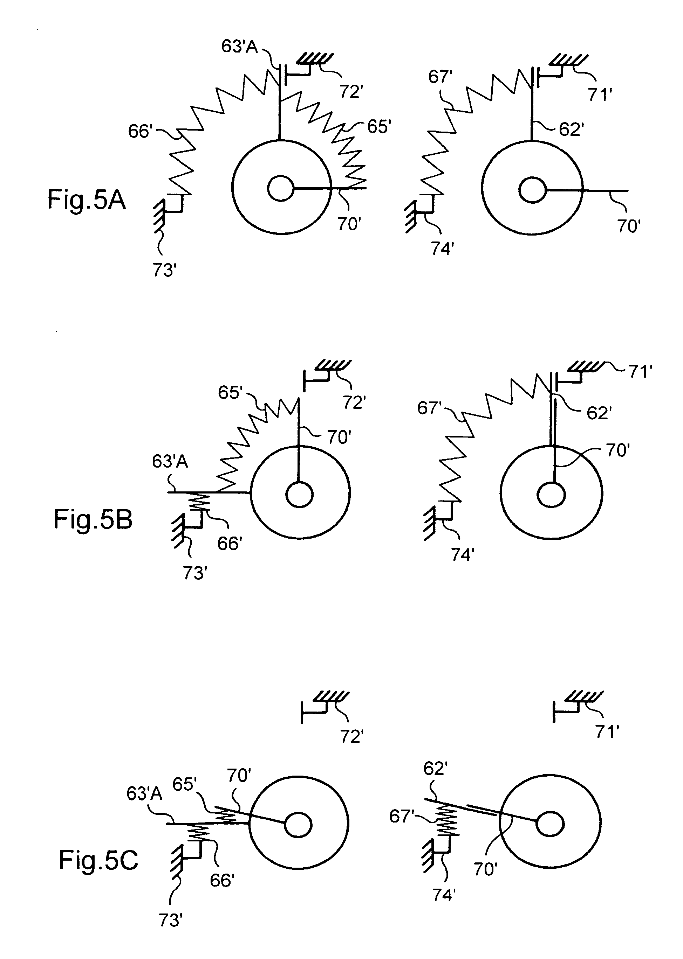

Comme le montrent plus particulièrement les figures 5A et 5B, le volet de commande 70' crée un effort sur le ressort de compression 65' qui retransmet cet effort, via la lamelle 63'A, au ressort de compression 66'. Ledit ressort de compression 66', ayant une raideur plus faible que celle du ressort de compression 65', se comprime alors. Si l'angle de rotation du volet de commande 70' reste inférieur à 90°, seul le ressort de compression 66' se comprime, entraînant dans sa course le volet 63'.

Ledit volet 63' pivote donc du même angle que le volet de commande 70' jusqu'à la position extrême où la lamelle 63'A vient en butée contre le bâti 73', position dans laquelle le volet 63' s'étend parallèlement à la direction du flux de gaz de recirculation. La section de la conduite de recirculation basse pression 22 est dans ce cas complètement ouverte.

Par ailleurs, comme le montrent également les figures 5A et 5B, la surface du volet 62' n'étant pas reliée au volet de commande 70', ce volet 62' ne change pas de position tant que le volet de commande 70' ne pivote pas d'un angle supérieur à 90°.

En revanche, comme le montre plus particulièrement la figure 5C, lorsque le volet de commande 70' pivote d'un angle supérieur à 90°, il entre en contact avec le volet 62' et l'entraîne ainsi dans sa rotation. Le ressort de compression 67' se comprime alors, laissant ledit volet 62' pivoter.

Par ailleurs, comme le montre également la figure 5C, toujours lorsque le volet de commande 70' pivote d'un angle supérieur à 90°, la lamelle 63'A du volet 63' reste en butée contre le bâti 73'. Le volet de commande 70' comprime alors le ressort de compression 65' contre cette lamelle 63'A.

Enfin, lorsque le volet de commande 70' a effectué une rotation de l'ordre de 171 ° (90°+81 °), le volet 62' arrive en butée contre le bâti 74', bloquant ainsi la rotation dudit volet de commande 70'. La conduite d'échappement 21 n'est donc jamais complètement obstruée. Dans cette position de recirculation complètement amorcée, la conduite d'échappement 21 est à 90% obstruée et la conduite de recirculation basse pression 22 totalement ouverte.

A n'importe quel angle de commande entre la position de recirculation non amorcée et la position de recirculation complètement amorcée, l'actionneur 61' peut faire pivoter dans le sens inverse l'arbre principal 64' et donc le volet de commande 70' qui lui est associé.

Lorsque le volet de commande 70' pivote dans le sens inverse, le ressort de compression 65' se détend. Lorsque ledit ressort de compression 65' est totalement détendu, le ressort de compression 66' pousse la lamelle 63'A du volet 63' vers sa position de départ correspondant à la position de recirculation non amorcée.

Par ailleurs, toujours lorsque le volet de commande 70' pivote dans le sens inverse, le ressort de compression 67' permet de pousser le volet 62' vers sa position de départ correspondant à la position de recirculation non amorcée.

La présente invention n'est nullement limitée aux modes de réalisation décrits et représentés, mais l'homme de métier saura y apporter toute variante conforme à la revendication 1.

## Revendications

1. Moteur à combustion interne (10) qui comprend d'une part, en aval d'une chambre de combustion (11), une ligne d'échappement (20) qui se divise en deux conduites (21,22) dans lesquelles circulent deux flux de gaz brûlés, à savoir une conduite d'échappement (21) débouchant vers l'extérieur et une conduite de recirculation basse pression (22) raccordée à une ligne d'admission d'air (23) située en amont de la chambre de combustion (11), et d'autre part, des moyens de régulation (60) pour obstruer ladite conduite d'échappement (21) et pour réguler le débit du flux de gaz brûlés circulant dans la conduite de recirculation basse pression (22), **caractérisé en ce que** lesdits moyens de régulation comprennent une vanne (60) à deux volets (62,63;62',63') déplaçables par un seul actionneur (61;61'), chaque volet (62,63;62',63') étant disposé dans des conduites d'échappement (21) et de recirculation basse pression (22).

2. Moteur à combustion interne (10) selon la revendication 1, **caractérisé en ce qu**'il comprend un filtre à particules à convertisseur catalytique (40) disposé sur la ligne d'échappement (20), en amont desdites conduites d'échappement (21) et de recirculation basse pression (22).

3. Moteur à combustion interne (10) selon la revendication 1 ou 2, **caractérisé en ce que** les deux volets (62,63 ;62',63') sont montés rotatifs autour d'un même axe de rotation (X).

4. Moteur à combustion interne (10) selon l'une des revendications 1 à 3, **caractérisé en ce que** les deux volets (62,63) sont montés fixes l'un par rapport à l'autre.

5. Moteur à combustion interne (10) selon l'une des revendications 1 à 4, **caractérisé en ce que** les deux volets (62,63) sont positionnés orthogonalement l'un par rapport à l'autre selon leur axe de rotation (X).

6. Moteur à combustion interne (10) selon les revendications 4 et 5, **caractérisé en ce que** les deux volets (62,63) sont adaptés à pivoter avec un débattement de l'ordre de 81 °.

7. Moteur à combustion interne (10) selon l'une des revendications 1 à 3, **caractérisé en ce que** les deux volets (62',63') sont montés libres l'un par rapport à l'autre.

8. Moteur à combustion interne (10) selon la revendication 7, **caractérisé en ce que** lesdits volets (62',63') sont positionnés au niveau de la division de la ligne d'échappement (20) en deux conduites d'échappement (21) et de recirculation basse pression (22).

9. Moteur à combustion interne (10) selon la revendication 7 ou 8, **caractérisé en ce que** le volet (63') positionné dans la conduite de recirculation basse pression (22) est adapté à pivoter avec un débattement de l'ordre de 90° et le volet (62') positionné dans la conduite d'échappement (21) est adapté à pivoter avec un débattement de l'ordre de 81 °.

10. Moteur à combustion interne (10) selon la revendication 9, **caractérisé en ce que** l'actionneur (61') est adapté à déplacer successivement le volet (63') positionné dans la conduite de recirculation basse pression (22) puis le volet (62') positionné dans la conduite d'échappement (21).

## Claims

1. Internal combustion engine (10) comprising, on the one hand, downstream of a combustion chamber (11), an exhaust line (20) which splits into two pipes (21, 22) through which two streams of burnt gases flow, namely an exhaust pipe (21) opening to the outside and a low-pressure recirculation pipe (22) connected to an air intake line (23) located upstream of the combustion chamber (11) and, on the other hand, regulating means (60) for closing off the said exhaust pipe (21) and regulating the flow rate of the stream of burnt gases flowing through the low-pressure recirculation pipe (22), **characterized in that** the said regulating means comprise a flap valve (60) with two flaps (62, 63; 62', 63') which can be moved by a single actuator (61; 61'), each flap (62, 63; 62', 63') being positioned in exhaust (21) and low-pressure recirculation (22) pipes.

2. Internal combustion engine (10) according to Claim 1, **characterized in that** it comprises a particulate filter with catalytic converter '(40) positioned in the exhaust line (20) upstream of the said exhaust (21) and low-pressure recirculation (22) pipes.

3. Internal combustion engine (10) according to Claim 1 or 2, **characterized in that** the two flaps (62, 63; 62', 63') are mounted such that they can rotate about one and the same axis of rotation (X).

4. Internal combustion engine (10) according to one of Claims 1 to 3, **characterized in that** the two flaps (62, 63) are mounted fixed one relative to the other.

5. Internal combustion engine (10) according to one of Claims 1 to 4, **characterized in that** the two flaps (62, 63), are positioned at right angles to one another about their axis of rotation (X).

6. Internal combustion engine (10) according to Claims 4 and 5, **characterized in that** the two flaps (62, 63) are designed to pivot through a travel of the order of 81°.

7. Internal combustion engine (10) according to one of Claims 1 to 3, **characterized in that** the two flaps (62', 63') are mounted freely with respect to one another.

8. Internal combustion engine (10) according to Claim 7, **characterized in that** the said flaps (62', 63') are positioned where the exhaust line (20) splits into two, exhaust (21) and low-pressure recirculation (22), pipes.

9. Internal combustion engine (10) according to Claim 7 or 8, **characterized in that** the flap (63') positioned in the low-pressure recirculation pipe (22) is designed to pivot through a travel of the order of 90° and the flap (62') positioned in the exhaust pipe (21) is designed to pivot through a travel of the order of 81°.

10. Internal combustion engine (10) according to Claim 9, **characterized in that** the actuator (61') is designed to move, in succession, the flap (63') positioned in the low-pressure recirculation pipe (22) followed by the flap (62') positioned in the exhaust pipe (21).

## Patentansprüche

1. Verbrennungsmotor (10), der einerseits stromabwärts hinter einem Brennraum (11) eine Auspuffanlage (20), die sich in zwei Leitungen (21, 22) aufteilt, in denen zwei Ströme von Abgasen fließen, nämlich eine nach außen mündende Abgasleitung (21) und eine Niederdruck-Rückführungsleitung (22), die an eine Luftansaugleitung (23) angeschlossen ist, die sich stromaufwärts vor dem Brennraum (11) befindet, und andererseits Regulierungsmittel (60) aufweist, um die Abgasleitung (21) zu versperren und um die Durchsatzmenge des Abgasstroms zu regulieren, der in der Niederdruck-Rückführungsleitung (22) fließt, **dadurch gekennzeichnet, dass** die Regulierungsmittel ein Ventil (60) mit zwei Klappen (62, 63; 62', 63') aufweisen, die von einem einzigen Stellglied (61; 61') verschoben werden können, wobei jede Klappe (62, 63; 62', 63') in Abgasleitungen (21) und Niederdruck-Rückführungsleitungen (22) angeordnet ist.

2. Verbrennungsmotor (10) nach Anspruch 1, **dadurch gekennzeichnet, dass** er einen Partikelfilter mit Katalysator (40) aufweist, der in der Auspuffanlage (20) stromaufwärts vor der Abgasleitung (21) und der Niederdruck-Rückführungsleitung (22) angeordnet ist.

3. Verbrennungsmotor (10) nach Anspruch 1 oder 2, **dadurch gekennzeichnet, dass** die zwei Klappen (62, 63; 62', 63') um die gleiche Drehachse (X) drehbar montiert sind.

4. Verbrennungsmotor (10) nach einem der Ansprüche 1 bis 3, **dadurch gekennzeichnet, dass** die zwei Klappen (62, 63) zueinander ortsfest montiert sind.

5. Verbrennungsmotor (10) nach einem der Ansprüche 1 bis 4, **dadurch gekennzeichnet, dass** die zwei Klappen (62, 63) gemäß ihrer Drehachse (X) zueinander orthogonal positioniert sind.

6. Verbrennungsmotor (10) nach den Ansprüchen 4 und 5, **dadurch gekennzeichnet, dass** die zwei Klappen (62, 63) geeignet sind, um mit einem Ausschlag in der Größenordnung von 81° zu schwenken.

7. Verbrennungsmotor (10) nach einem der,Ansprüche 1 bis 3, **dadurch gekennzeichnet, dass** die zwei Klappen (62',63') zueinander frei montiert sind.

8. Verbrennungsmotor (10) nach Anspruch 7, **dadurch gekennzeichnet, dass** die Klappen (62', 63') in Höhe der Teilung der Auspuffanlage (20) in zwei Abgas- (21) und Niederdruck-Rückführungsleitungen (22) positioniert sind.

9. Verbrennungsmotor (10) nach Anspruch 7 oder 8, **dadurch gekennzeichnet, dass** die in der Niederdruck-Rückführungsleitung (22) positionierte Klappe (63') geeignet ist, um mit einem Ausschlag in der Größenordnung von 90° zu schwenken, und die in der Abgasleitung (21) positionierte Klappe (62') geeignet ist, um mit einem Ausschlag in der Größenordnung von 81° zu schwenken.

10. Verbrennungsmotor (10) nach Anspruch 9, **dadurch gekennzeichnet, dass** das Stellglied (61') geeignet ist, um nacheinander die in der Niederdruck-Rückführungsleitung (22) positionierte Klappe (63') und dann die in der Abgasleitung (21) positionierte Klappe (62') zu verschieben.
